# EUROPEAN PATENT APPLICATION

(11) **EP 1 075 092 A2**
(43) Date of publication of application: **07.02.2001**
(21) Application number: 00116716.2
(22) Date of filing: 02.08.2000
(51) Int. Cl.: H04B 7/08, H04B 7/06

(54) **CDMA communication apparatus and system with path diversity**

(30) Priority: 02.08.1999 JP 21870899
(71) Applicant: Kokusai Electric Co., Ltd., Tokyo 164-8511 (JP)
(72) Inventor: Dosaka, Junya, c/o Kokusai Electric Co., Ltd., Tokyo 164-8511 (JP)
(74) Representative: Liesegang, Eva

(57) **Abstract**

Conventional CDMA receiving apparatuses have trouble constructing a fading-resistant system with a simple, low-cost configuration. The present invention has been made to provide a fading-resistant CDMA communication apparatus and system realized in a simple, low-cost configuration.

The CDMA communication apparatus and system includes as a basic configuration antennas(1a and 1b), amplification means (2a, 2b), (4a and 4b), and delay means (3a and 3b). Two or more of the basic configurations are so provided that two or more antennas(1) are arranged with a space of about one wavelength or more enough to obtain a space diversity effect. Further, each delay means is made different in delay amount from another, setting each delay amount to one or more symbols of the signal.

## Description

### BACKGROUND OF THE INVENTION

### 1. Field of the Invention

The present invention relates to a CDMA communication apparatus and system, and particularly to a fading-resistant CDMA communication apparatus and system realized in a simple, low-cost configuration.

### 2. Description of the Related Art

A code division multiple access (CDMA) system offers a higher degree of privacy and more flexibility in expanding the system than conventional frequency division multiple access (FDMA) and time division multiple access (TDMA) systems do. Such a CDMA system has already gone into practical use in Japan as a next-generation micro-cellular system for portable or cellular phones.

In the CDMA system, frequency diffusion is performed by use of pseudo-random noise codes. If the spread bandwidth is much wider than the correlation bandwidth of a transmission path accompanied by a fading, the influence of the fading can be reduced by a path diversity effect typical of a RAKE system.

The spread bandwidth in the IS-95 standard is around 1.25 MHz, and that in the Wide Band CDMA standard is around 4 to 5 MHz.

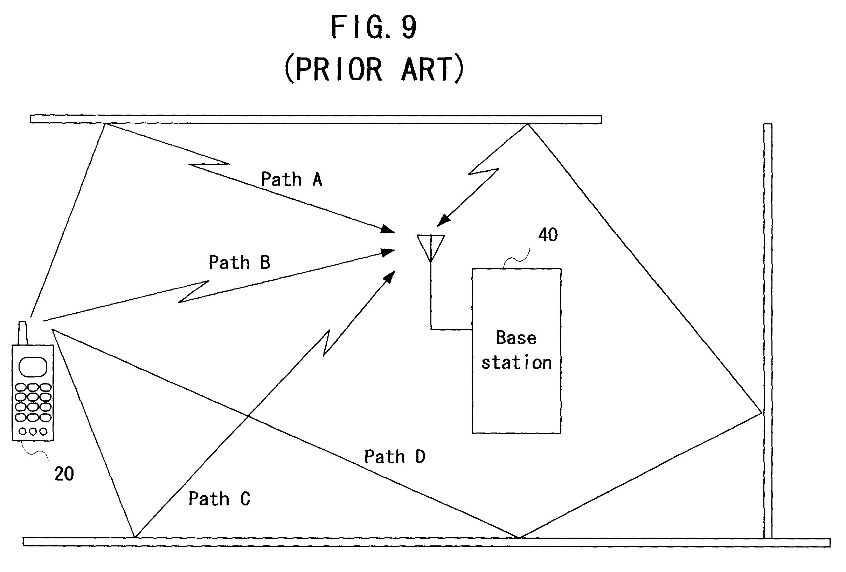

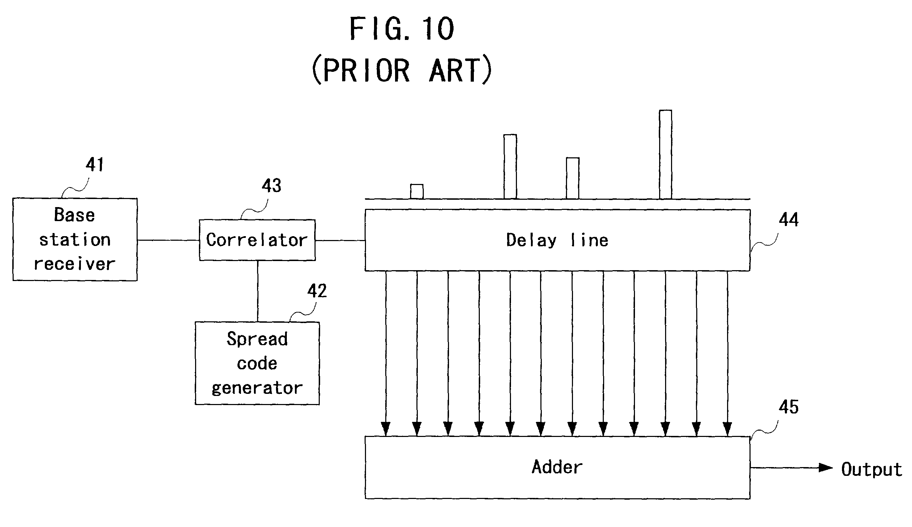

Figs. 9 and 10 illustrate a RAKE receiver for use in a CDMA system. Fig. 9 is a schematic diagram for explaining a case where a base station receives a signal from a portable phone in a multi-path system. Fig. 10 is a block diagram showing a receiving apparatus at the base station.

As shown in Fig. 9, in most cases, a signal transmitted from a portable phone 20 is received at a base station 40 via multiple paths (paths A, B, C and D).

As shown in Fig. 10, the receiving apparatus at the base station 40 is constituted of a base-station receiver 41 for receiving and processing incoming signals from an antenna, a spread code generator 42 for generating spread codes, a correlator 43 for correlating the received signals with the spread codes, a delay line 44 for delaying the incoming signals from the correlator 43 one by one, and an adder 45 for simultaneously adding the signals supplied from respectively specified parts of the delay line 44 to output the added signal.

The CDMA receiving system executes correlation operation based on spread codes used for secondary modulation of sending signals to output from the correlator 43 the results with time resolutions corresponding to the symbol length of the corresponding spread code.

Figs. 9 and 10 show an up-link situation in which a radio wave from the portable phone (portable station) 20 is transmitted through the multiple paths and four wave outputs different in delay amount are output from four taps of the delay line. These outputs are then modified by weights proportional to their signal strengths prior to being synthesized so that the best signal-to-noise (SN) ratio is achieved.

Thus, even if great fading is observed in each path, the range of variation observed in the synthesized signal is narrow because time variations are not correlated at all. This makes it possible to reduce the influence of the fading.

The recent demand for frequency assignment has become tight, but technical problems in the CDMA system have conspired to limit the CDMA spread bandwidth to the above-mentioned band. In addition, the correlation bandwidth of fading and variations in signal strength vary according to the environment, the speed of and distance to a mobile unit, and so on.

If the correlation bandwidth of fading is larger than the spread bandwidth, outputs of the correlator tend to be gathered around the beginning taps, and the path diversity effect may not meet expectations.

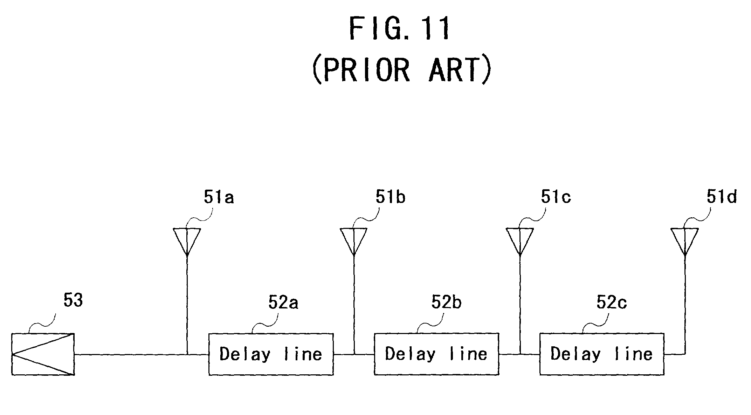

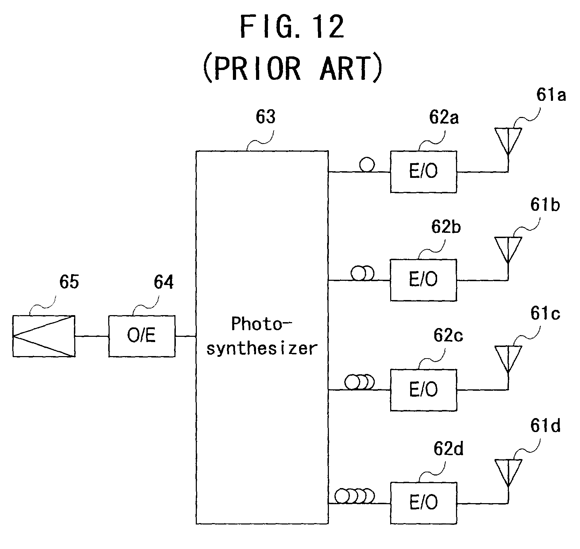

As measures for such a case, there are methods as shown in Figs. 11 and 12. Fig. 11 is a block diagram showing the structure of a receiving apparatus in which delay lines are multistage-connected. Fig. 12 is a block diagram showing the structure of a receiving apparatus in which the length of optical fiber is adjusted.

The receiving apparatus shown in Fig. 11 is constituted of a plurality of antennas 51a, 51b, 51c and 51d, a plurality of delay lines 52a, 52b and 52c, and an amplifier 53.

When the receiving apparatus of Fig. 11 is in operation, a signal received at the antenna 51a is input to the amplifier 53 without delay. A signal received at the antenna 51b is input to the amplifier 53 through the delay line 52a. A signal received at the antenna 51c is input to the amplifier 53 through the delay lines 52b and 52a. A signal received at the antenna 51d is input to the amplifier 53 through the delay lines 52c, 52b and 52a.

Thus, the multistage-connected delay lines 52 and the antennas 51 provided in their tracks cause intentional delays in combination.

On the other hand, the receiving apparatus shown in Fig. 12 is constituted of a plurality of antennas 61a, 61b, 61c and 61d, a plurality of electro-optical signal transducers (E/O) 62a, 62b, 62c and 62d, a photo-synthesizer 63, an opt-electrical signal transducer (O/E) 64, and an amplifier 65.

When the receiving apparatus of Fig. 12 is in operation, electrical signals received at respective antennas 61a through 61d are converted into optical signals by corresponding E/Os 62a through 62d, respectively. The optical signals are input to and synthesized at the photo-synthesizer 63 through corresponding optical fiber cables different in length. Then, the synthesized optical signal is converted into an electrical signal at the O/E transducer 64, and amplified at the amplifier 65.

Since the lengths of the optical fiber cables between the photo-synthesizer 63 and the E/Os 62 are intentionally varied, transmission of the optical signals is so delayed that the signal received at each antenna 61 is delayed depending on the length of optical fiber.

In both cases shown in Figs. 11 and 12, the delay amount is intentionally varied among the antennas to add a delay for one symbol or more of the spread code to the wave received from each antenna. In addition, outputs of the correlator are sifted tap by tap. Thus the diversity effect can be obtained.

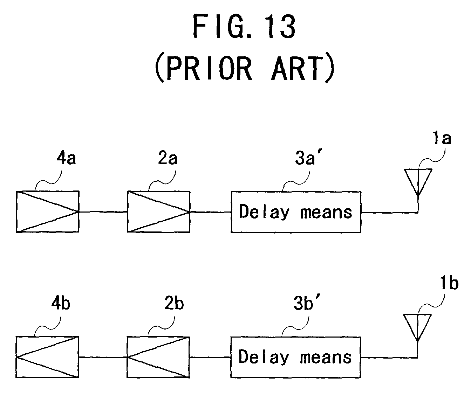

Fig. 13 shows a basic configuration of a communication apparatus provided with any of the above-mentioned conventional receiving apparatus. Fig. 13 is a block diagram showing the structure of a conventional CDMA communication apparatus. The CDMA communication apparatus of Fig. 13 includes a transmitting part and a receiving part. The transmitting part is constituted of an antenna 1a, a delay means 3', and first and second amplification means 4a and 2a. The receiving part is constituted of an antenna 1b, a delay means 3b', and first and second amplification means 2b and 4b.

Such a conventional CDMA communication apparatus is also disclosed in Japanese patent published application No. 10-112673, entitled "RAKE Reception Method and Therefor Receiver", which was laid open on April 28, 1998 (applicant: Kokusai Electric Co. Ltd. Inventor: Tatsuya Abe et al.).

In the RAKE receiver, a matched filter is operated only when pilot signals are input and the delay profile is generated in a delay profile generation circuit. Then, a valid path detection circuit obtains the valid path position of a pilot signal from the generated delay profile, obtains the valid path position of another symbol from the valid path positions of the pilot signals before and after the symbol by interpolation. The received signals indicative of the valid path positions for respective valid paths are demodulated, phase-interpolated in a phase interpolation circuit, and synthesized in a common-mode synthesis circuit.

However, the conventional methods, as shown in Figs. 11 and 12, have the following problems.

An increase in the number of delay circuits incorporated reduces the signal level, and this requires more amplifiers for correction of the reduced signal level, and hence a high-priced apparatus. Further, the loss varies from antenna to antenna, and this requires additional components for loss adjustment, and hence a complicated configuration.

When the delay circuits are incorporated into the receiving side, the losses for the delay circuits are added to the system noise figure (NF: ratio of the input SN ratio to the output SN ratio), resulting in downsizing of the call area, the number of subscribers, and son on.

On the other hand, when the delay circuits are incorporated into the transmitting side, the losses for the delay circuits should be compensated in the last-stage power amplifier. This requires not only a high-priced amplifier, but more consumption power as well.

In the optical-fiber feeder type of Fig. 12, the delay amount can be easily set, but the E/Os 64 and the O/E 62 are additionally required. Such additional optics are expensive, and the use of the optics results in an increase in the cost of the apparatus.

The apparatus shown in Fig. 12 requires the additional cost five or ten times as expensive as that of the system shown in Fig. 11, even for the receiving side alone.

The present invention has been made in consideration of the above-mentioned facts, and it is an object thereof to provide a fading-resistant CDMA communication apparatus and system with a simple, low-cost configuration.

### SUMMARY OF THE INVENTION

In a preferred form of the present invention, there is provided a CDMA communication apparatus including a receiving antenna, amplification means and a delay means as a basic configuration. The amplification means are provided before and behind the delay means. The delay means converts a signal amplified in the preceding amplification means into a signal of any frequency to delay the output of the signal. Then, the delay means outputs the delayed signal to the subsequent amplification means after returning the frequency to the one before the frequency conversion. Two or more of the basic configurations are so provided that two or more antennas are arranged with a space enough to obtain a space diversity effect. Further, the delay means are made different in delay amount from each other, setting each delay amount to one or more symbols of the received signal. Thus, a fading-resistant apparatus can be realized in a simple, low-cost configuration.

In another form of the present invention, there is provided a CDMA communication apparatus including a transmitting antenna, amplification means and a delay means as a basic configuration. The amplification means are provided before and behind the delay means. The delay means converts a signal amplified in the preceding amplification means into a signal of any frequency to delay the output of the signal. Then, the delay means outputs the delayed signal to the subsequent amplification means after returning the frequency to the one before the frequency conversion. Two or more of the basic configurations are so provided that two or more antennas are arranged with a space enough to obtain a space diversity effect. Further, the delay means are made different in delay amount from each other, setting each delay amount to one or more symbols of the transmitting signal. Thus, a fading-resistant apparatus can be realized in a simple, low-cost configuration.

In still another form of the present invention, there is provided an apparatus that combines the above-mentioned receiving CDMA communication apparatus and transmitting CDMA communication apparatus.

In yet another form of the present invention, there is provided a CDMA communication apparatus in which an antenna is commonly used as receiving and transmitting antennas.

The CDMA communication apparatus is applicable to a CDMA communication system as a radio base-station apparatus, a micro BS or a booster.

### BRIEF DESCRIPTION OF THE DRAWINGS

Fig. 1 is a block diagram showing a basic configuration of a CDMA communication apparatus according to an embodiment of the present invention;
Fig. 2 is a block diagram showing another basic configuration of the CDMA communication apparatus according to the embodiment of the present invention;
Fig. 3 is a block diagram showing an example of a receiving apparatus in the CDMA communication apparatus according to the embodiment of the present invention;
Fig. 4 is a block diagram showing another example of a receiving apparatus in the CDMA communication apparatus according to the embodiment of the present invention;
Fig. 5 is a block diagram showing a case where the CDMA communication apparatus according to the embodiment of the present invention is applied to a base-station apparatus;
Fig. 6 is a block diagram showing a case where the CDMA communication apparatus according to the embodiment of the present invention is applied to an inner portion of a micro BS;
Fig. 7 is a block diagram showing a case where the CDMA communication apparatus according to the embodiment of the present invention is applied to a booster directly connected to an MDE;
Fig. 8 is block diagram showing an internal configuration of a master apparatus shown in Fig. 7;
Fig. 9 is a schematic diagram for explaining a case where a base station receives a signal from a portable phone in a multi-path system;
Fig. 10 is a block diagram showing a receiving apparatus at the base station;
Fig. 11 is a block diagram showing a receiving apparatus in which delay lines are multistage-connected; and
Fig. 12 is a block diagram showing a receiving apparatus in which the length of optical fiber is adjusted.

### 〈Description of Reference Numerals〉

1: Antenna, 2: Amplification Means, 3: Delay Means, 5: Modulator/Demodulator, 6: I/F, 7, 8: DSU, 9: Micro BS, 10: Booster, 11: Master apparatus, 12: Amplifier, 13: Electro-Optical Signal Transducer, 14:Opt-Electrical Signal Transducer, 15: Distributor, 16: Synthesizer, 17: CPU, 18: DUP, 19a: Opt-Electrical Signal Transducer, 19b: Electro-Optical Signal Transducer, 20: Portable phone, 31, 31': Oscillator, 32: Frequency Synthesizer, 33, 33a, 33b: Filter, 34: Frequency Separator, 40: Base station, 41: Base-Station Receiver, 42: Spread Code Generator, 43: Correlator, 44: Delay Line, 45: Adder, 51: Antenna, 52: Delay Line, 53: Amplifier, 61: Antenna, 62: Electro-Optical Signal Transducer, 63: Photo-synthesizer, 64: Opt-Electrical Signal Transducer, 65: Amplifier.

### DESCRIPTION OF TEE PREFERRED EMBODIMENT

The preferred embodiments of the present invention will now be described with reference to the accompanying drawings.

The following function implementing means may be any means or devices as long as the functions can be implemented. Alternatively, part or all of the functions may be implemented by software. Further, the function implementing means may be realized in two or more circuits, or two or more of the function implementing means may be realized in a single circuit.

According to the present invention, a CDMA communication apparatus includes an antenna, amplification means and a delay means as a basic configuration. The amplification means are provided before and behind the delay means. The delay means converts a signal amplified in the preceding amplification means into a signal of any frequency to delay the output of the signal. Then, the delay means outputs the delayed signal to the subsequent amplification means after returning the frequency to the one before the frequency conversion. Two or more of the basic configurations are so provided that two or more antennas are arranged with a space of about one wavelength or more enough to obtain a space diversity effect. In addition, the delay means are made different in delay amount from each other, setting each delay amount to one or more symbols of the signal. Thus, a fading-resistant apparatus can be realized in a simple, low-cost configuration.

According to the present invention, a CDMA communication system is capable of performing RAKE reception. In the CDMA communication system, a receiver at a base station or portable station has a path diversity function for reducing a fading caused by disturbed waves (multi-path effect) in mobile communications, micro-cellular mobile communications, local area or closed space communications operated in a code division multiple access (CDMA) system. In this case, a transmitting or receiving antenna at a radio base station consists of a plurality of element antennas. The element antennas are arranged with a space of about one wavelength or more enough to obtain the space diversity effect. Then, a delay amount corresponding to the symbol length of a spread signal (one chip rate) or more is artificially added to these antennas to form a fading environment. Thus, the path diversity function (RAKE receiver) can be effectively used to suppress signal degradation.

Artificial generation of a delay amount is realized as follows: A high-frequency signal is converted into a signal of any IF (intermediate frequency), and the converted signal is filtered prior to being returned to the original high-frequency signal.

In one embodiment of the present invention, the CDMA communication apparatus is provided with two or more antennas for receiving signals, and amplification means between the antennas and a plurality of delay means to be connected to the respective antennas. The amplification means are also provided behind the delay means. Thus, any deterioration in signal level can be prevented, unlike the conventional configuration shown in Fig. 11 in which two or more delay lines are connected in series. Further, unlike the case in Fig. 12, the embodiment does not need to provide electro-optical and opt-electrical signal transducers before and behind the delay means, thereby realizing a simple, low-cost configuration.

In the embodiment of the present invention, there also be provided a CDMA communication system in which the above-mentioned CDMA communication apparatus is applied to a radio base-station apparatus, a micro BS, and a booster. Such a system can be of a simple, low-cost configuration resistant to fading.

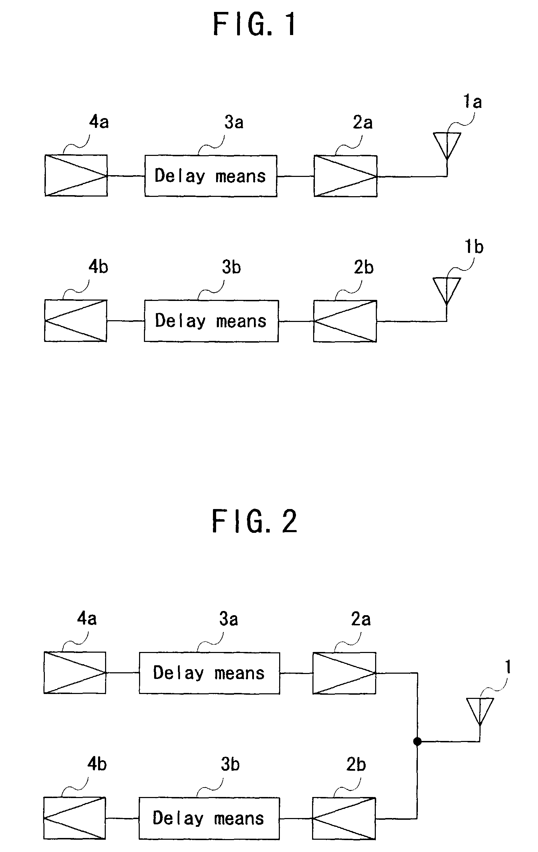

Fig. 1 illustrates a basic configuration of the CDMA communication apparatus (the communication apparatus concerned) according to one embodiment of the present invention. Fig. 1 is a block diagram showing a basic configuration of the CDMA communication apparatus according to the embodiment of the present invention. Portions like those in Fig. 13 are given the same reference numbers for purposes of illustration.

As shown in Fig. 1, the basic configuration of the CDMA communication apparatus according to the embodiment of the present invention includes a transmitting part and a receiving part. The transmitting part is constituted of an antenna 1a, a first amplification means 4a, a delay means 3a, and a second amplification means 2a. The receiving part is constituted of an antenna 1b, a first amplification means 3b, a delay means 3b, and a second amplification means 4b.

In the CDMA communication apparatus according to the embodiment of the present invention, two or more basic units shown in Fig. 1 are so provided that two or more antennas are arranged with a space of about one wavelength or more enough to obtain a space diversity effect. Such a transmitting/receiving communication apparatus as to make the delay means 3 different in delay amount from each other can be a multipath-ready, fading-resistant apparatus.

The following specifically describes each element.

The first amplification means 4a in the transmitting part amplifies an incoming signal.

The delay means 3a in transmitting part delays the output of the signal amplified in the first amplification means 4a to the second amplification means 2a for a specific period of time.

The second amplification means 2a in transmitting part amplifies the signal delayed in the delay means 3a to a specific level. Then it outputs the amplified signal to the antenna 1a.

The antenna 1a in the transmitting part sends out the signal amplified in the second amplification means 2a to the air.

The antenna 1b in the receiving part captures a signal from the air and outputs the same to the first amplification means 2b.

The first amplification means 2b in the receiving part amplifies the signal captured through the antenna 1b and outputs the amplified signal to the delay means 3b.

The delay means 3b in the receiving part delays the signal amplified in the first amplification means 2b and outputs the delayed signal to the second amplification means 4b.

The second amplification means 4b in the receiving part amplifies the signal delayed in the delay means 3b.

The basic configuration of the communication apparatus concerned can be modified as shown in Fig. 2. Fig. 2 is a block diagram showing another basic configuration of the CDMA communication apparatus according to another embodiment of the present invention.

The basic configuration of the communication apparatus shown in Fig. 2 is such that an antenna 1 is commonly used for reception and transmission.

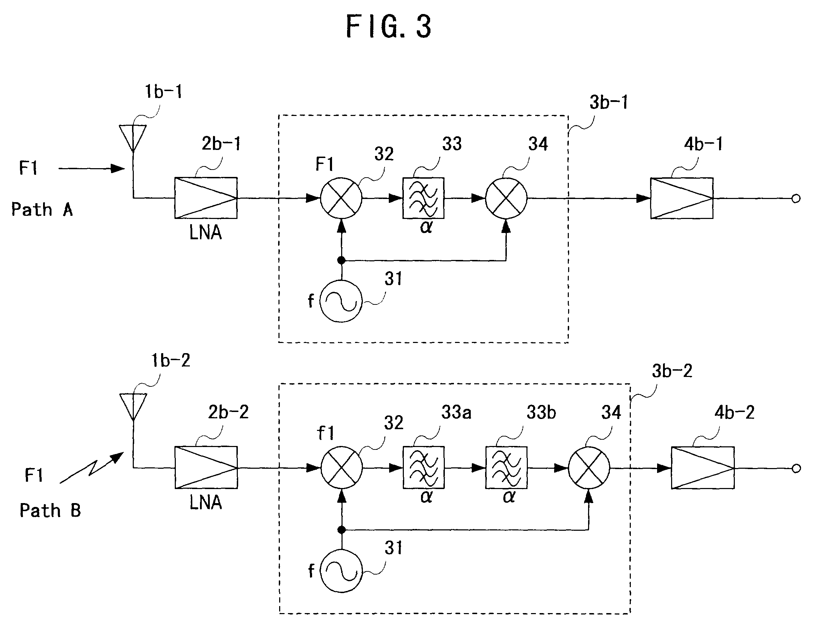

Referring to Fig. 3, the following describes a concrete example of the basic configuration of the CDMA communication apparatus according to the embodiment of the present invention. Fig. 3 is a block diagram showing an example of a receiving apparatus in the CDMA communication apparatus according to the embodiment of the present invention.

As shown in Fig. 3, the receiving apparatus is constituted of antennas 1 b-1 and 1 b-2, amplifiers 2 b-1 and 2 b-2, delay means 3 b-1 and 3 b-2, and amplifiers 4 b-1 and 4 b-2.

The delay means 3 b-1 consists of an oscillator 31, a frequency synthesizer 32, a filter 33, and a frequency separator 34.

The delay means 3 b-2 consists of the oscillator 31, the frequency synthesizer 32, filters 33a and 33b, and the frequency separator 34.

The following specifically describes each element of the receiving apparatus.

The antenna 1 b-1 receives a signal from a path A at a frequency F1.

The antenna 1 b-2 receives a signal from a path B at the frequency F1.

The amplifier 2 b-1 is a circuit for amplifying the incoming signal from the antenna 1 b-1; it may be a low noise amplifier (LNA).

The amplifier 2 b-2 is a circuit for amplifying the incoming signal from the antenna 1 b-2; it may be the LNA.

The amplifier 4 b-2 amplifies a signal input from the delay means 3 b-1.

In the delay means 3 b-1, the oscillator 31 generates any frequency f to output the same to the frequency synthesizer 32 and the frequency separator 34.

The frequency synthesizer 32 multiplies the incoming signal from the amplifier 2 b-1 by the oscillator frequency from the oscillator to convert the same into a signal of any frequency. The converted signal is then output to the filter 33.

The filter 33 may be a surface acoustic wave (SAW) filter; it filters the signal so that the filtered signal exhibits a sharp normal-band boundary. This process has an effect of addition of a delay α due to group delay caused by the filtering as well as a normal super-heterodyne effect (spurious sensitivity suppressing effect).

The frequency separator 34 multiplies the signal, to which the filter 33 has added any delay, by the oscillator frequency from the oscillator 31 to return the signal frequency to the original frequency before being input to the delay means 3 b-1. The returned signal frequency is then output to the amplifier 4 b-1.

In the delay means 3 b-2, the oscillator 31, the frequency synthesizer 32 and the frequency separator 34 are the same as those in the delay means 3 b-1. The filters 33a and 33b in the delay means 3 b-2 also have the same configuration as the filter 33 in the delay means 3 b-1 does.

A different point is that the delay means 3 b-2 has a two-stage filter, and hence it adds a delay β (= 2α).

The delay means 3 b-2 in Fig. 3 has the two-stage filter 33, but if the number of stages is increased to three or more, any delay β (= n * α, where n is an integer) can be added.

In any case, the delay means is designed to make the correlation value for the delays α and β correspondent to one chip rate or more.

The following describes the processing of a received signal executed in Fig. 3. It should be noted that Fig. 3 shows an up-link case.

A wave incoming at the frequency F1 through the path A is received at the antenna 1 b-1, and low-noise amplified in the amplifier 2 b-1.

Then, the frequency synthesizer 32 in the delay means 3 b-1 converts (IF converts) the amplified signal at the oscillator frequency input from the oscillator 31. The filter 33 filters the converted signal while adding the delay α due to the group delay. After that, the frequency separator 34 returns the same to the original frequency.

Further, the amplifier 4 b-1 amplifies the signal to output the amplified signal with the delay α added thereto.

On the other hand, a wave incoming from the path B is received at the antenna 1 b-2, and low-noise amplified in the amplifier 2 b-2.

Then, the frequency synthesizer 32 in the delay means 3 b-2 converts (IF converts) the amplified signal at the oscillator frequency input from the oscillator 31. The filter 33a filters the converted signal while adding the delay α due to the group delay. Further, the filter 33b adds the delay α to the signal, and the frequency separator 34 returns the same to the original frequency.

After that, the amplifier 4 b-2 amplifies the signal to output the amplified signal with the delay β (= 2a) added thereto.

Thus, the amplifiers 4 b-1 and 4 b-2 are to output a signal with any delay added thereto.

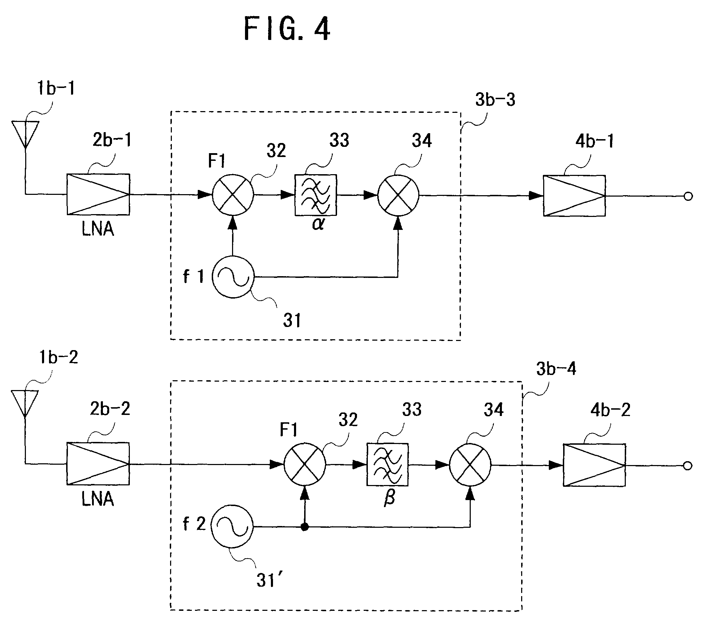

Referring to Fig. 4, the following describes another concrete example of the basic configuration of the CDMA communication apparatus according to the embodiment of the present invention. Fig. 4 is a block diagram showing another example of a receiving apparatus in the CDMA communication apparatus according to the embodiment of the present invention.

As shown in Fig. 4, the receiving apparatus is constituted of the antennas 1 b-1 and 1 b-2, the amplifiers 2 b-1 and 2 b-2, delay means 3 b-3 and 3 b-4, and the amplifiers 4 b-1 and 4 b-2.

The delay means 3 b-3 consists of the oscillator 31, the frequency synthesizer 32, the filter 33 and the frequency separator 34.

The delay means 3 b-4 consists of an oscillator 31', the frequency synthesizer 32, a filter 33', and the frequency separator 34.

The delay means 3 b-3 in Fig. 4 is the same as that in Fig. 3, in which the filter 33 adds the delay α. Here, the oscillator 31 generates a frequency f1.

On the other hand, the oscillator 31' of the delay means 3 b-4 in Fig. 4 generates a frequency f2. The frequency synthesizer 32 converts the frequency of the signal amplified in the amplifier 2 b-1 at the frequency f2, while the filter 33' filters the frequency-converted signal to add the delay β. The change of the frequency used for conversion from the frequency f1 to the frequency f2 allows the frequency-converted signal to be filtered with a different amount of delay.

In Fig. 4, the delay means is designed to make the delay amounts α and β correspondent to one chip rate or more, in the same manner as in Fig. 3.

The operation in Fig. 4 is basically the same as that in Fig. 3. A different point is that the delay means 3 b-2 uses the two filters 33a and 33b to add the delay β, while the delay means 3 b-4 uses the single filter 33i to add the delay β. Thus, the delay amount obtained in Fig. 4 becomes equal to that obtained in Fig. 3.

Unlike the configuration of Fig. 3 in which the delay means is required to have two or more filters 33, the configuration of Fig. 4 allows the filter 33 and the oscillator 31 to be the same type of circuit configuration. This makes them easy to manage and design circuit parts because of no need to increase the types of parts.

Further, the use of the configuration show in Fig. 4 allows the delay means to select any type of filter 33 and oscillator 31 in each basic configuration. This makes it possible to minimize the number of parts, and hence to simplify the entire configuration.

Furthermore, the basic configuration of the CDMA communication apparatus shown in Fig. 3 can be combined with that of the CDMA communication apparatus shown in Fig. 4, resulting in a CDMA communication apparatus having plural types of basic configurations.

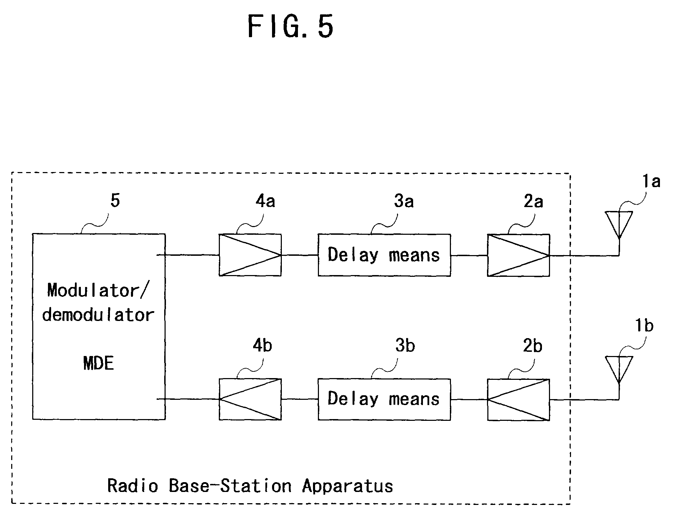

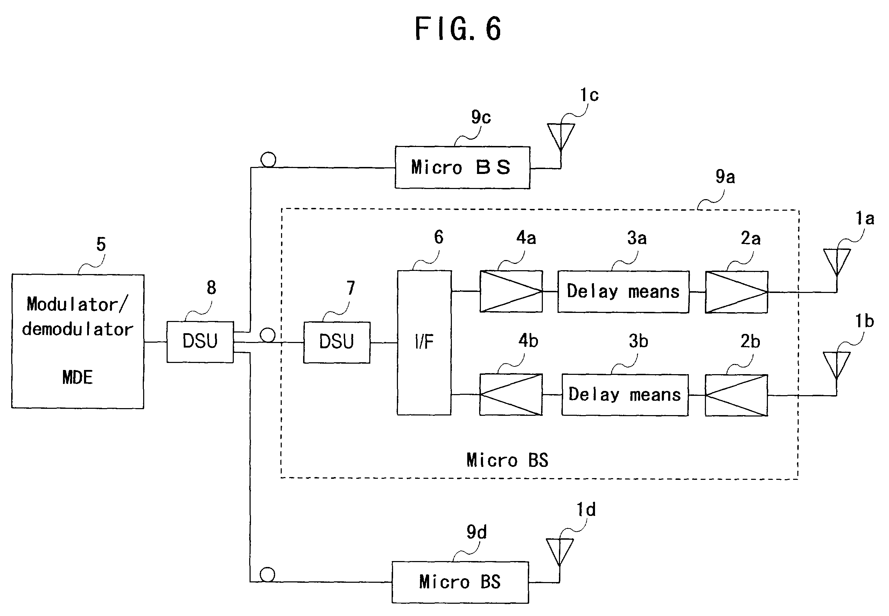

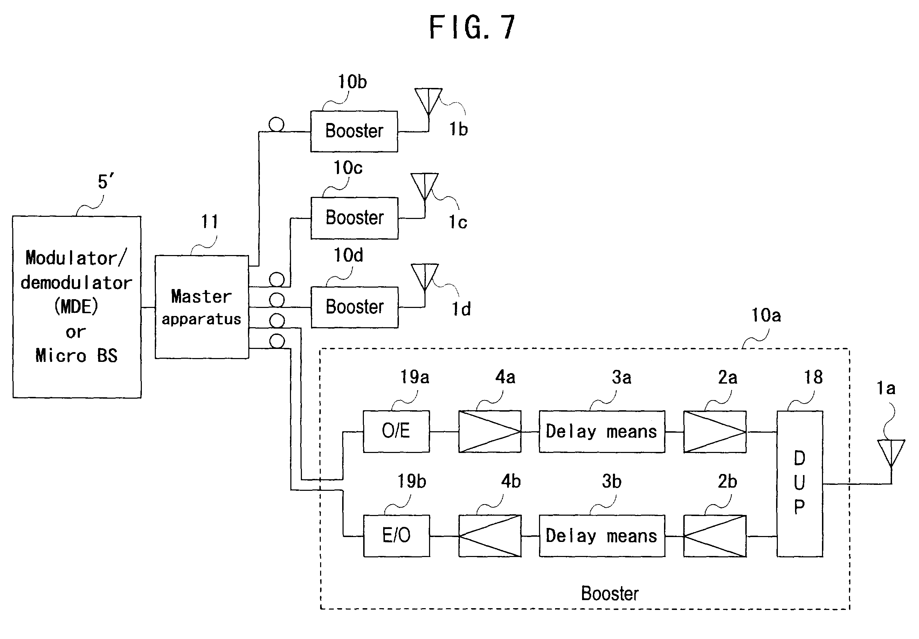

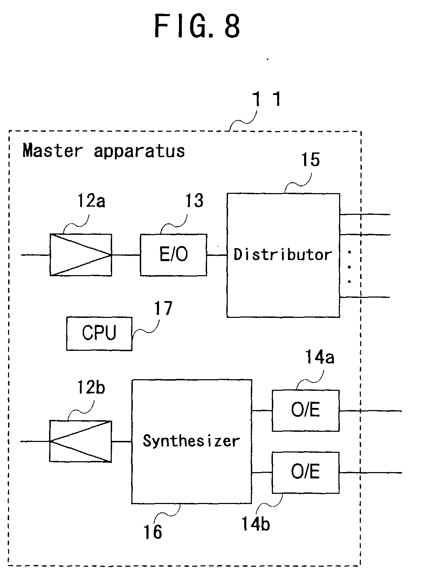

Referring to Figs. 5, 6, 7 and 8, the following describes examples of CDMA communication apparatuses using the above-mentioned basic configurations of the CDMA communication apparatus according to the embodiment of the present invention. Fig. 5 is a block diagram showing a case where the CDMA communication apparatus according to the embodiment of the present invention is applied to a base-station apparatus. Fig. 6 is a block diagram showing a case where the CDMA communication apparatus according to the embodiment of the present invention is applied to an inner portion of a micro BS. Fig. 7 is a block diagram showing a case where the CDMA communication apparatus according to the embodiment of the present invention is applied to such a booster as to be directly connected to an MDE. Fig. 8 is a block diagram showing an internal configuration of a master apparatus shown in Fig. 7.

At first, an example of Fig. 5 is described.

As shown in Fig. 5, the base-station apparatus is such that two or more basic configurations of the CDMA communication apparatus according to the embodiment of the present invention are so arranged that they are connected to a modulator/demodulator (MDE) 5.

To be more specific, the base-station apparatus includes a transmitting part and a receiving part. The transmitting part is constituted of the antenna 1a, the amplifiers 2a and 4a, and the delay circuit 3a as the delay means. The receiving part is constituted of the antenna 1b, the amplifiers 2b and 4b, and the delay circuit 3b as the delay means. Then, two or more pairs of transmitting and receiving configurations are connected to the modulator/demodulator 5.

Next, an example of Fig. 6 is described.

The CDMA communication system shown in Fig. 6 is constituted of micro BSs 9a, 9c and 9d provided with antennas 1a, 1b, 1c and 1d, a DSU (Digital Service Unit) 8 connected to each micro BS 9 through ISDN, and the modulator/demodulator (MDE) 5.

The internal configuration of the micro BS 9a is divided into a transmitting part and a receiving part. The transmitting part includes the antenna 1a, the amplifiers 2a and 4a, and the delay circuit 3a as the delay means. The receiving part includes the antenna 1b, the amplifiers 2b and 4b, and the delay circuit 3b as the delay means. Further, the micro BS 9a is internally provided with an interface (I/F) connected to the amplifiers 4a and 4b, and a DSU 7 connected to the I/F 6 and connected by wire to the DSU 8 on the MDE 5 side.

Next, an example of Fig. 7 is described.

The CDMA communication system shown in Fig. 7 is constituted of boosters 10a, 10b, 10c and 10d provided with antennas 1a, 1b, 1c and 1d, a master apparatus 11, and a modulator/demodulator (MDE) 5'.

Here, the modulator/demodulator (MDE) 5' may be replaced by a micro BS.

The internal configuration of the booster 10a includes the antenna 1a commonly used for reception and transmission, a duplexer (DUP) 18, a transmitting part and a receiving part. The transmitting part includes the amplifiers 2a and 4a, the delay circuit 3a as the delay means, and an opt-electrical signal transducer (O/E) 19a for converting an optical signal to an electrical signal. The receiving part includes the amplifiers 2b and 4b, the delay circuit 3b as the delay means, and an electro-optical signal transducer (E/O) 19b for converting an electrical signal to an optical signal.

As shown in Fig. 8, the internal configuration of the master apparatus 11 is divided into a transmitting part and a receiving part. The transmitting part includes an amplifier 12a, an electro-optical signal transducer (E/O) 13, and a distributor 15 for distributing optical signals. The receiving part includes an opt-electrical signal transducers (O/E) 14a and 14b, a synthesizer 16 for synthesizing electrical signals, and an amplifier 12b. Further, the master apparatus is provided with a CPU 17 for controlling the inside of the apparatus.

In the example of Fig. 7, instead of direct connection from a micro BS to an antenna at the radio base station, the booster 10 once amplifies a high-frequency signal. Such a configuration can be applied to a system having a plurality of antennas or LCXs (Leakage Coaxial Cable) for radio service in a closed area or the like. In this case, frequency conversion characteristic of the present invention is executed on the booster side.

In the embodiment of the present invention, the CDMA communication apparatus and the CDMA system are such that the amplification means are provided before and behind the delay means 3. In such a configuration, the delay means performs frequency conversion to delay the output of a signal. The frequency-converted signal is then returned to the original frequency before being output. This makes it possible to construct a fading-resistant apparatus and system. The frequency conversion also improves its selectivity to achieve an apparatus and system resistant to jam transmissions with a simple, low-cost configuration.

As described above, according to the present invention, there is provided a CDMA communication apparatus including an antenna, amplification means and a delay means as a basic configuration. The amplification means are provided before and behind the delay means. The delay means converts a signal amplified in the preceding amplification means into a signal of any frequency to delay the output of the signal. Then, the delay means outputs the delayed signal to the subsequent amplification means after returning the frequency to the one before the frequency conversion. Two or more of the basic configurations are so provided that two or more antennas are arranged with a space enough to obtain a space diversity effect. Then, the delay means are made different in delay amount from each other, setting each delay amount to one or more symbols of the signal. Thus, a fading-resistant apparatus can be realized in a simple, low-cost configuration.

Further, according to the present invention, there is provided a CDMA communication system in which the above-mentioned CDMA communication apparatus is applied to a radio base-station apparatus, a micro BS, or a booster. Thus, a fading-resistant system can also be realized in a simple, low-cost configuration.

## Claims

1. A CDMA communication apparatus having a path diversity function for reducing a multi-path fading in a CDMA communication system, comprising as a basic configuration:
an antenna for receiving a radio signal; amplification means for amplifying the signal; and delay means for delaying the output of the signal, wherein
said amplification means are provided before and behind said delay means, said delay means converts the signal amplified in said preceding amplification means into a signal of any frequency to delay the output of the signal and outputs the delayed signal to said subsequent amplification means after returning the frequency of the frequency-converted signal to the frequency before the frequency conversion, and
two or more of said basic configurations are so provided that two or more of said antennas are arranged with a space enough to obtain a space diversity effect, and that said delay means are made different in delay amount from each other in each of said basic configurations, setting each delay amount to one or more symbols of the received signal.

2. A CDMA communication apparatus having a path diversity function for reducing a multi-path fading in a CDMA communication system, comprising as a basic configuration:
an antenna for transmitting a radio signal; amplification means for amplifying the signal; and delay means for delaying the transmission of the signal, wherein
said amplification means are provided before and behind said delay means, said delay means converts the signal amplified in said preceding amplification means into a signal of any frequency to delay the output of the signal and outputs the delayed signal to said subsequent amplification means after returning the frequency of the frequency-converted signal to the frequency before the frequency conversion, and
two or more of said basic configurations are so provided that two or more of said antennas are arranged with a space enough to obtain a space diversity effect, and that said delay means are made different in delay amount from each other in each of said basic configurations, setting each delay amount to one or more symbols of the transmitting signal.

3. A CDMA communication apparatus, which combines said CDMA communication apparatus according to claim 1 and said CDMA communication apparatus according to claim 2.

4. A CDMA communication apparatus according to claim 3, wherein an antenna is commonly used as transmitting and receiving antennas.

5. A CDMA communication apparatus according to one of the preceding claims, wherein
said delay means in each basic configuration includes an oscillator for generating a specific frequency, a frequency synthesizer for performing frequency conversion of the signal amplified in said preceding amplification means at the frequency generated by said oscillator, a filter for limiting the band of the frequency-converted signal to delay the output of the same, and a frequency separator for using the frequency generated by said oscillator to return the frequency of the delayed signal to the one before the frequency conversion.

6. A CDMA communication apparatus according to claim 5, wherein
said filter in one of said basic configurations is provided in two stages so that said delay means in the other basic configuration is made different in delay amount from that in the one basic configuration.

7. A CDMA communication apparatus according to claim 5 or 6, wherein
said oscillator in one of said basic configurations generates variable frequencies so that said delay means in the other basic configuration is made different in delay amount at said filter from that in the one basic configuration.

8. A CDMA communication system using said CDMA communication apparatus according to one of the preceding claims as a radio base-station apparatus provided with a modulator/demodulator for modulating and demodulating a signal.

9. A CDMA communication system comprising:
two or more micro BSs, each of which is provided with said CDMA communication apparatus according to one of the preceding claims, a DSU connected to an ISDN line, and an interface for connecting said CDMA communication apparatus to said DSU;
a DSU connected to said two or more micro BSs through an ISDN line; and
a modulator/demodulator connected to the DSU.

10. A CDMA communication system having a path diversity function for reducing a multi-path fading in a CDMA communication system, comprising:
a booster as a basic configuration, which includes
a receiving system composed of a preceding amplification means for amplifying a received signal, a delay means for delaying the output of the amplified signal, a subsequent amplification means for amplifying the delayed signal, an electro-optical signal transducer for converting the electrical signal amplified in said subsequent amplification means into an optical signal,
a transmitting system composed of an opt-electrical signal transducer for converting an optical signal into an electrical signal, a preceding amplification means for amplifying the converted electrical signal, a delay means for delaying the output of the amplified signal, and a subsequent amplification means for amplifying the delayed signal,
a transmitting/receiving antenna, and
a duplexer for outputting a signal received at said antenna to the preceding amplification means in said receiving system, and outputting a signal input from the subsequent amplification means in said transmitting system to said antenna, wherein
each of said delay means in said transmitting and receiving systems converts the signal amplified in said preceding amplification means into a signal of any frequency to delay the output of the signal, and outputs the delayed signal to said subsequent amplification means after returning the frequency of the frequency-converted signal to the frequency before the frequency conversion, and
two or more of said basic configurations are so provided that two or more of said antennas are arranged with a space enough to obtain a space diversity effect, and that said delay means are made different in delay amount from each other in each of said basic configurations, setting each delay amount to one or more symbols of the received or transmitting signal;
a modulator/demodulator for modulating and demodulating signals; and
a master apparatus for connecting said two or more boosters to said modulator/demodulator, wherein
said master apparatus includes an opt-electrical signal transducer for converting optical signals input from said boosters into electrical signals, a synthesizer for synthesizing the converted electrical signals, an amplification means for amplifying the signal synthesized in said synthesizer to output the amplified signal, an electro-optical signal transducer for converting the amplified signal into an optical signal, and a distributor for distributing the converted optical signal to corresponding one of said boosters.

11. A CDMA communication system according to claim 10, wherein
said delay means in each basic configuration includes an oscillator for generating a specific frequency, a frequency synthesizer for performing frequency conversion of the signal amplified in said preceding amplification means at the frequency generated by said oscillator, a filter for limiting the band of the frequency-converted signal to delay the output of the same, and a frequency separator for using the frequency generated by said oscillator to return the frequency of the delayed signal to the one before the frequency conversion, and
said filter in one of said basic configurations is provided in two or more stages so that said delay means in the other basic configuration is made different in delay amount from that in the one basic configuration.

12. A CDMA communication system according to claim 10, wherein
said delay means in each basic configuration includes an oscillator for generating a specific frequency, a frequency synthesizer for performing frequency conversion of the signal amplified in said preceding amplification means at the frequency generated by said oscillator, a filter for limiting the band of the frequency-converted signal to delay the output of the same, and a frequency separator for using the frequency generated by said oscillator to return the frequency of the delayed signal to the one before the frequency conversion, and
said oscillator in one of said basic configurations generates variable frequencies so that said delay means in the other basic configuration is made different in delay amount at said filter from that in the one basic configuration.
